# EUROPEAN PATENT SPECIFICATION

(11) **EP 3 031 654 B1**
(45) Date of publication and mention of the grant of the patent: **06.06.2018**
(21) Application number: 14197097.0
(22) Date of filing: 10.12.2014
(51) Int. Cl.: B60K 35/00, G02B 26/02, G02B 27/01, B60J 3/00, B60J 3/04

(54) **Display apparatus for a motor vehicle comprising a screen device, driver assistance system, motor vehicle and method**
Anzeigevorrichtung für ein Kraftfahrzeug mit Bildschirmvorrichtung, Fahrerassistenzsystem, Kraftfahrzeug und Verfahren
Appareil d'affichage pour un véhicule automobile comprenant un dispositif écran, système d'assistance au conducteur, véhicule et procédé

(43) Date of publication of application: 15.06.2016
(73) Proprietor: Valeo Schalter und Sensoren GmbH, 74321 Bietigheim-Bissingen (DE)
(72) Inventor: Reilhac, Patrice, 74321 Bietigheim-Bissingen (DE)

(56) References cited:
- WO-A1-2013/128573
- DE-A1- 10 162 355
- GB-A- 2 368 403
- JP-A- 2002 104 017
- US-A1- 2008 158 096

## Description

The present invention relates to a display apparatus for a motor vehicle, comprising a screen device and a projector device, by which light is emitted to the screen device for representing a display on the screen deceive, wherein the projector device and the screen device are located in an interior of the motor vehicle. Furthermore, the present invention relates to a driver assistance system. Moreover, the present invention relates to a motor vehicle, in particular a passenger car. Finally, the present invention relates to a method for operating a display apparatus.

Presently, the interest is in particular directed to a display apparatus for a motor vehicle. The display apparatus can be used for providing information to the driver or other vehicle occupants. For example, information of a navigation system, an infotainment system or the like can be represented. The display apparatus can comprise an appropriate display, e.g. a TFT-screen that is arranged on or in the dashboard of the motor vehicle. Furthermore, so-called head-up displays (HUD) are known that comprise a projector device, by means of which information can be projected on the windscreen of the motor vehicle. In today's motor vehicles, the head-up-display is used to display simple messages or graphics. The screen that can be located in the center console of the motor vehicle is used to display richer contents like internet pages or movies.

Document WO 97/08025 A2 discloses a windscreen for a motor vehicle, which incorporates over all or part of the windscreen, an electrochromatic material that renders all or part of the windscreen opaque when a sensor is activated by unauthorized entry or excessive disturbance. Preferably the window is kept transparent by means of an electric current flowing through the eletrochromatic part of the windscreen and optionally only part of the windscreen is rendered opaque to spell out a warning message.

Furthermore, document FR 2 745 249 A1 discloses a liquid crystal material that is incorporated in a windscreen or applied to it as a film, so that when it is activated by a signal from a conventional, e.g. audible alarm, the change of the state produces complete or partial opacity. Therefore, driving becomes impracticable and the altered external appearance draws attention to the break-in. The loss of transparency is progressive, giving the driver time to stop safely in the event of any maloperation of the system. Transparency is recovered once the activating signal is suppressed.

Moreover, US 2008/158510 A1 discloses an apparatus for displaying information within a vehicle interior includes a surface having a coating for emitting visible light when excited by an ultraviolet (UV) light beam, and a laser projection device (LPD) for generating and directing the UV light beam onto the coating to display information on the surface. The LPD generates one or more UV laser beams, and the coating has one or more light-emitting layers each excitable by a different UV wavelength, Each layer emits a different color of light when excited. The surface is a transparent windshield or lens, or an opaque surface. A method for displaying information within a vehicle interior includes applying a light-emitting coating to a surface in at least one layer, and generating and projecting a UV light beam onto the coating to present information in at least as many colors as there are layers.

Finally GB 2 368 403 A discloses a display apparatus and method comprising the features of the preamble of the independent claims.

It is the object of the present invention to demonstrate a solution, how a display apparatus for a motor vehicle of the initially mentioned kind can be operated more reliable. According to the invention, this object is solved by a display apparatus, by a driver assistance system, by a motor vehicle and by a method vehicle having the features according to the respective independent claims. Advantageous implementations of the present invention are the subject matter of the dependent claims, of the description and of the figures.

A display apparatus according to the invention for a motor vehicle, comprises a screen device and a projector device, by which light is emitted to the screen device for representing a display on the screen deceive, wherein the projector device and the screen device are located in an interior of the motor vehicle. Moreover, the screen device comprises an optical element, whose light transmission is capable of being controlled in dependence on a control signal, and the display apparatus comprises a control device for providing the control signal.

The display apparatus in arranged in the interior of the motor vehicle and is adapted to provide information to a vehicle occupant, in particular the driver of the motor vehicle. Furthermore, the display device can be used to display images or videos. This information can be derived from an infotainment system, a navigation system or the like. The display apparatus comprises a projector device that can include an appropriate projector. The projector device can be adapted to project an image on the screen device. For example, the projector device can be constructed as a video projector.

The screen device also includes an optical element that can be driven dependent on a control signal. In response to the control signal, the transparency of the optical elements can be adjusted. For example, the optical element can be operated in a first operating mode in which the optical element is transparent. By means of the control signal, the optical element can be transferred in a second operating mode, in which the optical element is not translucent or opaque. The optical element can also be operated in a mode in which the optical element is partially transparent. The optical element can serve as a screen for the light emitted from the projector device, if it is at least partially opaque. The optical element can be transparent, if it is not used as a screen for the projector device. Thus, the optical element can be adjusted depending on the application.

Preferably, the optical element is an electrochromic element and the control device is adapted to provide an electrical voltage as the control signal. The optical element can change its light transmission properties in response to the electrical voltage and thus allow control over the amount of light passing through. The electrochromic element or material can changes its opacity dependent on the electrical voltage provided by the control device. For example, the optical element can change the opacity between a colored, translucent state and a transparent state. In the colored state, the optical element can be white.

According to an embodiment of the present invention, the optical element is arranged at least on an area of a windscreen of the motor vehicle. The optical element or the electrochromic element can be arranged on the side of the windscreen, which faces the interior. The optical element may be for example applied as a film onto the windscreen. In this case, the optical element may cover a predetermined area of the windscreen or the complete windscreen. Alternatively, the optical element can be integrated into the windscreen. The optical element may for example, be placed on that area of the windscreen that is in the primary field of view of the driver. Thus, the area of the windscreen in the driver's peripheral field of view may remain transparent. Thus, at least a part of the windscreen can serve as a screen for the projector.

In a further embodiment, the optical element is arranged at least on an area of a head-up display of the motor vehicle. The head-up display may in particular include a so-called combiner or combiner blade that includes a transparent pane. On this pane, the optical element can be arranged at least partially. The projector can then project the light on the optical element, which is arranged on the combiner. In the normal driving mode, the combiner is transparent and it is used to display simple content. For example, information concerning the speed of the motor vehicle or simple graphics for navigation can be displayed on the combiner. In an automated driving mode of the motor vehicle, the optical element can be opaque to enable the projection of richer images like movies or a television program to perceive much better quality for the vehicle occupants. In this case, the road is still in the peripheral field of view.

Furthermore, it can be provided that the optical element is arranged at least on an area of a dashboard of the motor vehicle. The optical element can be disposed on a predetermined region of the dashboard or instrument panel. The optical element can also be disposed on a predetermined region of the cockpit of the motor vehicle. Today's dashboards have normally black or gray surfaces in order to prevent glare from sunlight. Such a black surface is not adapted to show an image from the projector device. To avoid glare in the normal condition, the optical element can be transparent. In an automated mode of the motor vehicle, the optical element can be opaque, e.g. white, to project the light emitted by the projector device.

In a further embodiment, it can be provided that the projector device is arranged at the roof of the motor vehicle. The projector device can be disposed in a region of the interior mirror of the motor vehicle. In particular, the projector device can be placed in a so-called dome control module. With such positioning of the projector device, an influence of the emitted light from the projector device can be prevented. According to the invention, the control device is adapted to detect a level of autonomous driving of the motor vehicle and to provide the control signal dependent on the detected level. The levels of autonomous driving defined according to the official classification system that has been established by the National Highway Traffic Safety Administration (NHTSA). Level 0 can denote that case, in which the driver completely controls the vehicle at all times. Level 1 can denote that case, in which individual vehicle controls are automated, such as electronic stability control or automatic braking. Level 2 can denote that case, in which at least two controls can be automated in unison, such as adaptive cruise control in combination with lane keeping. Level 3 can denote that case, in which the driver can fully cede control of all safety-critical functions in certain conditions. The car senses when conditions require the driver to retake control and provides a "sufficiently comfortable transition time" for the driver to do so. Level 4 can denote that case, in which the vehicle performs all safety-critical functions for the entire trip, with the driver not expected to control the vehicle at any time. As this vehicle would control all functions from start to stop, including all parking functions, it could include unoccupied cars. A driver assistance system of the motor vehicle can operate the vehicle autonomously according to one of the above-mentioned level. The controller may determine the level and determine the control signal in accordance to the detected level.

Preferably, the light transmission of the optical element is capable of being adjusted in steps or continuously dependent on the control signal. The light transmittance of the optical element can be adjusted in dependence of the control signal. It can be provided, that the change in the transmittance of the optical element takes place continuously or in steps. For example, the light transmittance can be adjusted to the level of the autonomous driving.

In a further embodiment, the control device is adapted to detect an input signal of a vehicle occupant and to provide the control signal dependent on the detected input signal. The control signal may be provided or altered dependent on an input signal. For this reason, the driver can operate a corresponding control button. It is further provided that the input signal can be provided by an external mobile device, such as a smart-phone or a tablet.

A driver assistance system according to the present invention for a motor vehicle comprises a display according to the invention. The driver assistant system can assist the driver in particular in autonomous driving the motor vehicle.

In addition, the invention also includes a driver assistance system according to the invention. In particular, the motor vehicle is formed as a passenger car.

A method according to the present invention used for operating a display apparatus for a motor vehicle. Here, a screen device and a projector device are provided, wherein the screen device and the projector device are located in an interior of the motor vehicle. Furthermore, light is emitted to the screen device by means of the projector device for representing a display on the screen deceive. Moreover, a light transmission of an optical element the screen device is controlled in dependence on a control signal and the control signal is provided by a control device of the display apparatus.

The preferred embodiments presented with respect to the display apparatus according to the invention and the advantages thereof correspondingly apply to the driver assistant system according to the invention, to the motor vehicle according to the invention as well as to the method according to the invention.

Below, embodiments of the invention are explained in more detail based on schematic drawings.

There show:
- Fig. 1: a schematic view of a motor vehicle according to an embodiment of the present invention that comprises a display apparatus, wherein a screen device of the display apparatus is located on a windscreen;
- Fig. 2: the motor vehicle according to another embodiment, wherein the screen device of the display apparatus is located on a combiner of a head-up display; and
- Fig. 3: the motor vehicle according to another embodiment, wherein the screen device of the display apparatus is located on a dashboard of the motor vehicle.

In the figures, identical or functionally identical elements are provided with the same reference characters.

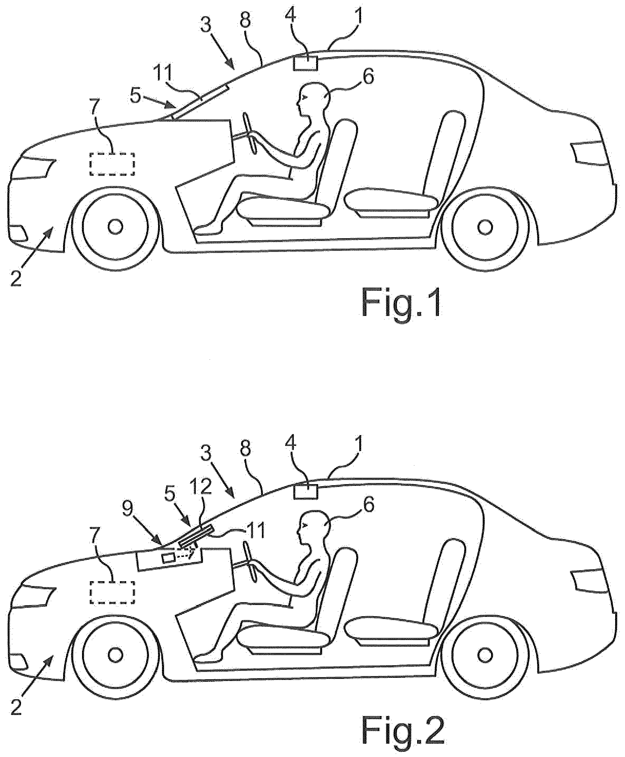

Fig. 1 shows a motor vehicle 1 according to an embodiment of the present invention. In the present embodiment, the motor vehicle 1 is formed as a passenger car. In particular, the motor vehicle 1 is formed as an autonomous vehicle. The motor vehicle 1 includes a driver assistance system 2. By means of the driver assistance system 2, the motor vehicle 1 can operate autonomously.

The driver assistance system 2 can include appropriate sensors that are capable of sensing its environment of the motor vehicle 1. A control device 7 can interpret sensory information to identify appropriate navigation paths, as well as obstacles and relevant signage. By definition, autonomous vehicles are capable of updating their maps based on sensory input, allowing the vehicles to keep track of their position even when conditions change or when they enter uncharted environments. The motor vehicle 1 can be operated in different levels, for example in the levels 0 to 4 established by the National Highway Traffic Safety Administration (NHTSA).

The motor vehicle 1 or the driver assistance system 2 further comprises a display apparatus 3. The display apparatus 3 further comprises a projector device 4. The projector device 4 can be configured in particular as a video projector. The projector device 4 can be arranged in a dome control module. By means of the projector device 4 light can be emitted and thus an image can projected onto a screen device 5. The screen device 5 comprises an optical element 11. The optical element 11 can be controlled by means of the control device 7. For controlling the optical element 11 a control signal can be provided by means of the control device 7. The control device 7 can be an electronic control unit (ECU) of the motor vehicle.

In response to the control signal, the light transmittance of the optical element 11 can be controlled. In particular, the optical element 11 comprises an electrochromic element or material. The control signal that is provided by means of the control device 7 can be an electrical voltage or an electrical current. In response to the control signal, the light transmittance of the optical element 11 can bet switched. For example, the optical element 11 can be transparent in a first mode and can be opaque in a second mode. The light transmittance can be set in stages or continuously. When the optical element 11 is opaque, it can serve as a projection screen for the projector device 4. If the optical element 11 is not used as projection screen, it can be transparent. The control device 7 can be capable of detecting the level of autonomous driving of the motor vehicle 1. Furthermore, the control device 7 can provide the control signal dependent on the detected level.

According to the embodiment of Fig. 1, the screen device 5 is arranged on a windscreen 8 of the motor vehicle 1. The screen device 5 is arranged at a predetermined area of the windscreen 8. This area can be in the primary field of view of a driver 6 of the motor vehicle 1. The optical element can for example be a foil, which is adhered to the windscreen 8. During the normal driving mode of the motor vehicle 1 the optical element 11 can be transparent.

The transparency of the optical element 11 is capable of being controlled dependent on the control signal. For example the optical element 11 can be turned to an opaque mode allowing projecting some information on it. The optical element 11 is turned in this mode in an autonomous mode of the motor vehicle 1. The transparency of the windscreen 8 thereby is subjected to the level of the autonomous mode, i.e. semitransparent at level 2, allowing the driver still to follow the forward traffic while possibly entirely opaque at level 3 and 4. The transparency of the optical element 11 or the windscreen 8 is automatically re-established either fully in one step or gradually depending on the driving situation and the level of the autonomous mode.

Fig. 2 shows a motor vehicle 1 according to another embodiment of the present invention. In this case, the display apparatus 3 comprises a head-up display 9. The head-up display 9 includes a so-called combiner 12 that comprises a transparent pane. This pane is used herein as the screen device 5. The optical element 11 can be arranged at least partially on the transparent pane or the combiner 12. The projector device 4 can then project the light on the optical element 11, which is arranged on the combiner 12.

Therefore, not only spare information like technical driving data can be projected on the head-up display 9 but also possibly full images like a screen of a browser or a movie when optical element 11 is turn to opacity. Such a mode can for example be authorized only at level 3 or 4 of the autonomous mode.

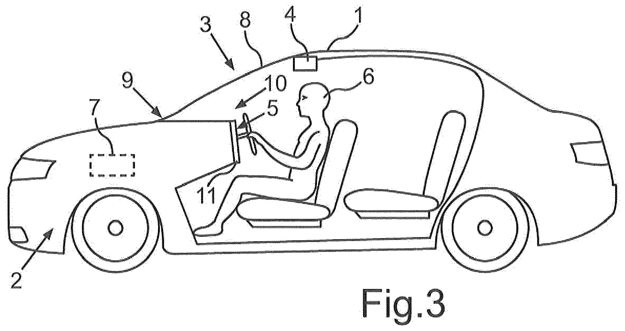

Fig. 3 shows a motor vehicle 1 according to another embodiment of the present invention. Herein, at least a part of the dashboard 10 of the motor vehicle 1 is used as the screen device 4. The dashboard 10 can have a black or gray surface in order to prevent glare from sunlight. During the normal driving mode of the motor vehicle 1, the optical element 11 can be transparent. During an automated driving mode of the motor vehicle 1, the optical element 11 can be opaque. In this case the optical element 11 can be used as a screen for the projector device 4.

## Claims

1. Display apparatus (3) for a motor vehicle (1), comprising a screen device (5) and a projector device (4), by which light is emitted to the screen device (5) for projecting an image on the screen device (5), wherein the projector device (4) and the screen device (5) are located in an interior of the motor vehicle (1), whereby the screen device (5) comprises an optical element (11), whose light transmission is capable of being controlled in dependence on a control signal and the display apparatus (3) comprises a control device (7) for providing the control signal, **characterized in that** the control device (7) is adapted to detect a level of autonomous driving of the motor vehicle (1) and to provide the control signal dependent on the detected level.

2. Display apparatus (3) according to claim 1,
**characterized in that**
the optical element (11) is an electrochromic element and the control device (7) is adapted to provide an electrical voltage as the control signal.

3. Display apparatus (3) according to claim 1 or 2,
**characterized in that**
the optical element (11) is arranged at least on an area of a windscreen (8) of the motor vehicle

4. Display apparatus (3) according to any one of the preceding claims,
**characterized in that**
the optical element (11) is arranged at least on an area of a head-up display (9) of the motor vehicle (1).

5. Display apparatus (3) according to any one of the preceding claims,
**characterized in that**
the optical element (11) is arranged at least on an area of a dashboard (10) of the motor vehicle

6. Display apparatus (3) according to any one of the preceding claims,
**characterized in that**
the projector device (5) is arranged at the roof of the motor vehicle (1).

7. Display apparatus (3) according to any one of the preceding claims,
**characterized in that**
the light transmission of the optical element (11) is capable of being adjusted in steps or continuously dependent on the control signal.

8. Display apparatus (3) according to any one of the preceding claims, **characterized in that**
the control device (7) is adapted to detect an input signal of a vehicle occupant (6) and to provide the control signal dependent on the detected input signal.

9. Driver assistance system (2) for a motor vehicle (1) comprising a display apparatus (3) according to any one of the preceding claims.

10. Motor vehicle (1) comprising a driver assistance system (2) according to claim 9.

11. Method for operating a display apparatus (3) for a motor vehicle (1), in which a screen device (5) and a projector device (4) are provided, wherein the screen device (5) and the projector device (4) are located in an interior of the motor vehicle (1), and light is emitted to the screen device (5) by the projector device (4) for projecting an image on the screen device (5), whereby a light transmission of an optical element (11) of the screen device (5) is controlled in dependence on a control signal provided by a control device (7) of the display apparatus, **characterized in that** the control device (7) is adapted to detect a level of autonomous driving of the motor vehicle (1) and to provide the control signal dependent on the detected level.

## Patentansprüche

1. Anzeigegerät (3) für ein Kraftfahrzeug (1), umfassend eine Bildschirmvorrichtung (5) und eine Projektorvorrichtung (4), durch welche Licht zum Projizieren eines Bildes auf die Bildschirmvorrichtung (5) zur Bildschirmvorrichtung (5) emittiert wird, wobei die Projektorvorrichtung (4) und die Bildschirmvorrichtung (5) sich in einem Inneren des Kraftfahrzeugs (1) befinden,
wobei
die Bildschirmvorrichtung (5) ein optisches Element (11) umfasst, dessen Lichtdurchlässigkeit in Abhängigkeit von einem Steuersignal geregelt werden kann, und das Anzeigegerät (3) eine Steuervorrichtung (7) zum Bereitstellen des Steuersignals umfasst, **dadurch gekennzeichnet, dass** die Steuervorrichtung (7) zum Erfassen eines Maßes autonomen Fahrens des Kraftfahrzeugs (1) und zum Bereitstellen des Steuersignals in Abhängigkeit vom erfassten Maß ausgelegt ist.

2. Anzeigegerät (3) nach Anspruch 1,
**dadurch gekennzeichnet, dass**
das optische Element (11) ein elektrochromes Element ist, und die Steuervorrichtung (7) zum Bereitstellen einer elektrischen Spannung als das Steuersignal ausgelegt ist.

3. Anzeigegerät (3) nach Anspruch 1 oder 2,
**dadurch gekennzeichnet, dass**
das optische Element (11) mindestens auf einem Bereich einer Windschutzscheibe (8) des Kraftfahrzeugs angeordnet ist

4. Anzeigegerät (3) nach einem der vorhergehenden Ansprüche,
**dadurch gekennzeichnet, dass**
das optische Element (11) mindestens auf einem Bereich einer Head-up-Anzeige (9) des Kraftfahrzeugs (1) angeordnet ist.

5. Anzeigegerät (3) nach einem der vorhergehenden Ansprüche,
**dadurch gekennzeichnet, dass**
das optische Element (11) mindestens auf einem Bereich eines Armaturenbretts (10) des Kraftfahrzeugs angeordnet ist

6. Anzeigegerät (3) nach einem der vorhergehenden Ansprüche,
**dadurch gekennzeichnet, dass**
die Projektorvorrichtung (5) am Dach des Kraftfahrzeugs (1) angeordnet ist.

7. Anzeigegerät (3) nach einem der vorhergehenden Ansprüche,
**dadurch gekennzeichnet, dass**
die Lichtdurchlässigkeit des optischen Elements (11) in Abhängigkeit vom Steuersignal schrittweise oder kontinuierlich angepasst werden kann.

8. Anzeigegerät (3) nach einem der vorhergehenden Ansprüche,
**dadurch gekennzeichnet, dass**
die Steuervorrichtung (7) zum Erfassen eines Eingabesignals eines Fahrzeuginsassen (6) und zum Bereitstellen des Steuersignals in Abhängigkeit vom erfassten Eingabesignal ausgelegt ist.

9. Fahrerassistenzsystem (2) für ein Kraftfahrzeug (1), umfassend ein Anzeigegerät (3) nach einem der vorhergehenden Ansprüche.

10. Kraftfahrzeug (1), umfassend ein Fahrerassistenzsystem (2) nach Anspruch 9.

11. Verfahren zum Betreiben eines Anzeigegeräts (3) für ein Kraftfahrzeug (1), in welchem eine Bildschirmvorrichtung (5) und eine Projektorvorrichtung (4) vorgesehen sind, wobei die Bildschirmvorrichtung (5) und die Projektorvorrichtung (4) sich in einem Inneren des Kraftfahrzeugs (1) befinden, und Licht durch die Projektorvorrichtung (4) zum Projizieren eines Bildes auf die Bildschirmvorrichtung (5) zur Bildschirmvorrichtung (5) emittiert wird,
wobei
eine Lichtdurchlässigkeit eines optischen Element (11) der Bildschirmvorrichtung (5) in Abhängigkeit von einem Steuersignal geregelt wird, das von einer Steuervorrichtung (7) des Anzeigegeräts bereitgestellt wird, **dadurch gekennzeichnet, dass** die Steuervorrichtung (7) zum Erfassen eines Maßes autonomen Fahrens des Kraftfahrzeugs (1) und zum Bereitstellen des Steuersignals in Abhängigkeit vom erfassten Maß ausgelegt ist.

## Revendications

1. Appareil d'affichage (3) pour un véhicule à moteur (1), comprenant un dispositif écran (5) et un dispositif projecteur (4), par lequel de la lumière est émise vers le dispositif écran (5) pour projeter une image sur le dispositif écran (5), le dispositif projecteur (4) et le dispositif écran (5) étant situés dans un intérieur du véhicule à moteur (1),
selon lequel
le dispositif écran (5) comprend un élément optique (11), dont la transmission lumineuse est susceptible d'être contrôlée en fonction d'un signal de commande
et l'appareil d'affichage (3) comprend un dispositif de commande (7) destiné à délivrer le signal de commande, **caractérisé en ce que** le dispositif de commande (7) est adapté pour détecter un niveau de conduite autonome du véhicule à moteur (1) et pour délivrer le signal de commande en fonction du niveau détecté.

2. Appareil d'affichage (3) selon la revendication 1, **caractérisé en ce que**
l'élément optique (11) est un élément électrochrome et le dispositif de commande (7) est adapté pour délivrer une tension électrique en tant que signal de commande.

3. Appareil d'affichage (3) selon la revendication 1 ou 2,
**caractérisé en ce que**
l'élément optique (11) est disposé au moins sur une zone d'un pare-brise (8) du véhicule à moteur

4. Appareil d'affichage (3) selon l'une quelconque des revendications précédentes,
**caractérisé en ce que**
l'élément optique (11) est disposé au moins sur une zone d'un affichage tête haute (9) du véhicule à moteur (1) .

5. Appareil d'affichage (3) selon l'une quelconque des revendications précédentes,
**caractérisé en ce que**
l'élément optique (11) est disposé au moins sur une zone d'un tableau de bord (10) du véhicule à moteur

6. Appareil d'affichage (3) selon l'une quelconque des revendications précédentes,
**caractérisé en ce que**
le dispositif projecteur (5) est disposé au niveau du toit du véhicule à moteur (1).

7. Appareil d'affichage (3) selon l'une quelconque des revendications précédentes,
**caractérisé en ce que**
la transmission lumineuse de l'élément optique (11) est susceptible d'être réglée par paliers ou de façon continue en fonction du signal de commande.

8. Appareil d'affichage (3) selon l'une quelconque des revendications précédentes,
**caractérisé en ce que**
le dispositif de commande (7) est adapté pour détecter un signal d'entrée d'un occupant (6) du véhicule et pour délivrer le signal de commande en fonction du signal d'entrée détecté.

9. Système d'aide à la conduite (2) pour un véhicule à moteur (1) comprenant un appareil d'affichage (3) selon l'une quelconque des revendications précédentes.

10. Véhicule à moteur (1) comprenant un système d'aide à la conduite (2) selon la revendication 9.

11. Procédé de fonctionnement d'un appareil d'affichage (3) pour un véhicule à moteur (1), dans lequel un dispositif écran (5) et un dispositif projecteur (4) sont prévus, le dispositif écran (5) et le dispositif projecteur (4) étant situés dans un intérieur du véhicule à moteur (1), et de la lumière étant émise vers le dispositif écran (5) par le dispositif projecteur (4) pour projeter une image sur le dispositif écran (5),
selon lequel
une transmission lumineuse d'un élément optique (11) du dispositif écran (5) est contrôlée en fonction d'un signal de commande délivré par un dispositif de commande (7) de l'appareil d'affichage, **caractérisé en ce que** le dispositif de commande (7) est adapté pour détecter un niveau de conduite autonome du véhicule à moteur (1) et pour délivrer le signal de commande en fonction du niveau détecté.
